# EUROPEAN PATENT SPECIFICATION

(11) **EP 4 679 168 B1**
(45) Date of publication and mention of the grant of the patent: **12.08.2026**
(21) Application number: 24834580.3
(22) Date of filing: 08.08.2024
(51) Int. Cl.: G02F 1/1675, G02F 1/16755, G02F 1/1677, G02F 1/1676, G02F 1/16753, G02F 1/1335, G02F 1/167, G02F 1/16756

(54) **UPPER COVER PLATE STRUCTURE AND ELECTROPHORETIC DISPLAY MODULE**
OBERE ABDECKPLATTENSTRUKTUR UND ELEKROPHORETISCHES ANZEIGEMODUL
STRUCTURE DE PLAQUE DE COUVERTURE SUPÉRIEURE ET MODULE D'AFFICHAGE ÉLECTROPHORÉTIQUE

(30) Priority: 08.05.2024 CN 202410560452
(43) Date of publication of application: 14.01.2026
(73) Proprietor: Wuxi Vision Peak Technology Co., Ltd., Wuxi, Jiangsu 214028 (CN)
(72) Inventor: BAO, Jin, Wuxi, Jiangsu 214028 (CN); CHEN, Shan, Wuxi, Jiangsu 214028 (CN); TANG, Zhenxing, Wuxi, Jiangsu 214028 (CN); XU, Jun, Wuxi, Jiangsu 214028 (CN)
(74) Representative: Bayramoglu et al.
(86) International application number: PCT/CN2024/110646
(87) International publication number: WO 2025/232016

(56) References cited:
- CN-A- 108 957 899
- CN-A- 111 399 304
- CN-A- 114 253 025
- CN-A- 114 488 643
- CN-A- 117 572 702
- CN-A- 118 348 718
- CN-U- 212 364 769
- JP-A- 2001 117 123
- US-A1- 2006 139 748

## Description

### TECHNICAL FIELD

The present disclosure relates to the technical field of electronic paper display (EPD), and in particular to an upper cover plate structure and an electrophoretic display module.

### BACKGROUND TECHNOLOGY

The existing electrophoretic display panel mainly includes an upper glass substrate, a filter, an indium tin oxide (ITO) layer, a barrier weir, a pixel electrode, and a lower substrate from top to bottom. The pixel electrode on a surface of the lower substrate is square. The ITO layer on a surface of the upper substrate serves as a whole, and covers the upper substrate. Hence, an oblique electric field will be generated between the pixel electrode and the upper ITO cover plate to cause serious image sticking at edges of pixels, thereby shortening the refresh cycle. How to weaken or eliminate the oblique electric field has become an urgent problem to be solved. CN212364769U discloses a display module which comprises a first substrate and a second substrate which are oppositely arranged, a filling area is formed between the first substrate and the second substrate, a pixel electrode layer is arranged on the surface of the first substrate, and a light filtering layer is arranged on the surface of the second substrate. A reflecting layer is arranged on the surface of the light filtering layer and comprises a plurality of reflecting layer microstructures arranged at intervals, a supporting structure is arranged in the filling area, the supporting structure makes contact with and is tangent to the surface of the light filtering layer and the surface of the pixel electrode layer, and pigment particles are filled in the filling area. The pixel electrode layer is provided with an isolation structure extending towards the direction of the light filtering layer, and the height of the isolation structure is not larger than that of the supporting structure.

### CONTENT OF THE INVENTION

The present disclosure provides an upper cover plate structure, as defined in appended claim 1, and an electrophoretic display module, as defined in appended claim 4, to weaken or eliminate the oblique electric field in the prior art.

According to a technical solution, the present disclosure provides an upper cover plate structure, including a first substrate, where a filter layer is provided on a surface of the first substrate; the filter layer includes a plurality of spaced-apart color filters; a notch is formed between adjacent color filters; a surface of the color filter away from the first substrate is provided with a reflection structure; a surface of the reflection structure away from the color filter and a surface of the notch are provided with a conductive layer; an insulating guide layer is filled in the notch; and the insulating guide layer is located on a surface of the conductive layer away from the first substrate.

The reflection structure includes a plurality of micro-reflection units; the plurality of micro-reflection units are uniformly arranged on the surface of each color filter; and a lower surface of the micro-reflection unit is a cambered surface protruding away from the color filter.

Further, the insulating guide layer is made of silicon nitride (SiNx).

Further, the insulating guide layer is spaced apart from or comes in contact with the color filter.

According to another technical solution, the present disclosure provides an electrophoretic display module, including a second substrate and the upper cover plate structure, where the second substrate is opposite to the first substrate; an electrophoretic display chamber is formed between the first substrate and the second substrate; pigment particles are filled in the electrophoretic display chamber; a surface of the second substrate facing the first substrate is provided with a pixel electrode layer; and an isolation structure extending to the first substrate is provided on the pixel electrode layer.

Further, an end of the isolation structure away from the second substrate abuts against the insulating guide layer.

Further, the pixel electrode layer includes a plurality of pixel electrodes distributed in an array, a gap is formed between two adjacent pixel electrodes, the insulating guide layer directly faces the gap, and the isolation structure covers the gap.

Further, a support structure is provided in the electrophoretic display chamber.

Further, the support structure includes supporting microspheres; and the supporting microspheres are supported between the reflection structure and the pixel electrode layer.

Further, a cross-sectional shape of the isolation structure includes a trapezoid.

The present disclosure has the following beneficial effects: The insulating guide layer is provided around the color filters, and the insulating guide layer is provided on the surface of the conductive layer, such that the color filters correspond to the pixel electrodes to form an electric field that is straight up and down. Therefore, the present disclosure weakens or eliminates the oblique electric field, reduces image sticking of the pixels, and improves the reflectance and contrast of the screen.

### DESCRIPTION OF THE DRAWINGS

FIG. 1 is a schematic view of an upper cover plate structure according to the present disclosure;
FIG. 2 is a schematic sectional view of an electrophoretic display module according to the present disclosure; and
FIG. 3 is a schematic view illustrating a comparison between an electric field not using a structure of the present disclosure and an electric field using the structure of the present disclosure.

### SPECIFIC IMPLEMENTATIONS

To make a person skilled in the art better understand the solutions in the present disclosure, the following clearly and completely describes the technical solutions in the embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

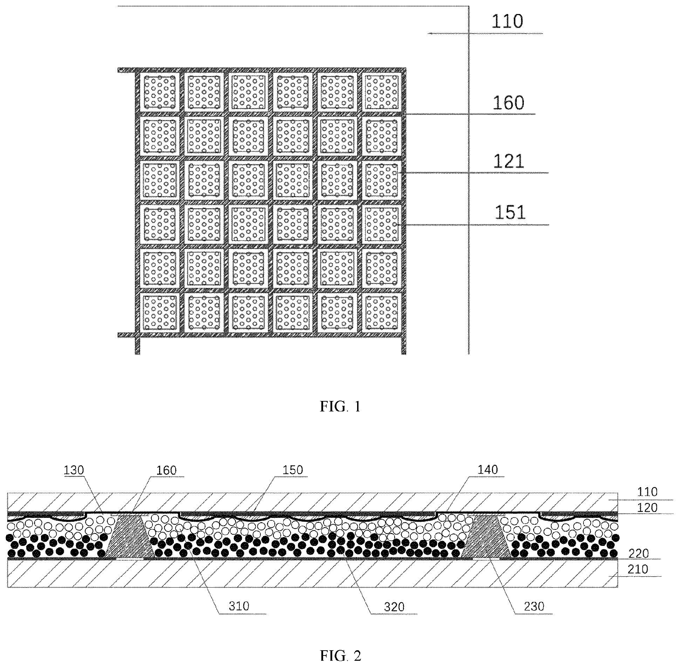

In a technical solution of the present disclosure, FIG. 1 is a schematic structural view provided according to a specific structure of an upper cover plate structure in the present disclosure. As shown in FIG. 1 and FIG. 2, the upper cover plate structure specifically includes:
first substrate 110, where filter layer 120 is provided on a surface of the first substrate 110. The filter layer 120 includes a plurality of spaced-apart color filters 121. The color filters 121 include, but are not limited to, red, green, and blue (RGB) filters.

Notch 130 is formed between adjacent color filters 121. A surface of the color filter 121 away from the first substrate 110 is provided with reflection structure 150. A surface of the reflection structure 150 away from the color filter 121 and a surface of the notch 130 are provided with conductive layer 140. Insulating guide layer 160 is filled in the notch 130. The insulating guide layer 160 is located on a surface of the conductive layer 140. The first substrate may be a glass substrate.

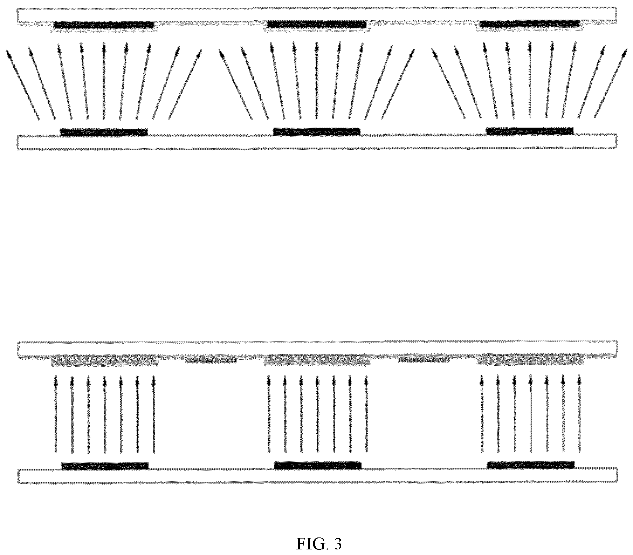

Specifically, as shown in FIG. 3, the insulating guide layer is provided on the surface of the conductive layer, and around the color filters 121, such that regions of the color filters 121 correspond to pixel electrodes on a surface of a lower cover plate to form an electric field that is straight up and down, thereby improving the display effect.

The insulating guide layer is preferably made of SiNx. A person skilled in the art may also select an insulating material according to an actual need.

In an embodiment of the technical solution, the reflection structure 150 includes a plurality of micro-reflection units 151. The plurality of micro-reflection units 151 are uniformly arranged on the surface of each color filter 121. A lower surface of the micro-reflection unit 151 is a cambered surface protruding away from the color filter 121.

The reflection structure may be made of an optical acrylic resin, a transparent polymer, a transparent inorganic substance, a transparent composite, and the like, and has a desirable reflecting effect. The optical acrylic resin can improve the reflecting luminance and color saturation by 30%.

Specifically, light from the first substrate 110 can be reflected at the micro-reflection units 151. In addition, with the micro-reflection units 151, pigment particles in an electrophoretic display region can further be uniformly dispersed. The micro-reflection units 151 are hemispherical. The micro-reflection units 151 may be obtained by spin-coating, photoetching, heat curing or photocuring.

In an embodiment of the technical solution, the insulating guide layer 160 comes in contact with the color filter 121. That is, the notch 130 is completely filled by the insulating guide layer. In this implementation manner, the color saturation of the image on the electrophoretic display panel can be effectively improved. In another implementation manner, the insulating guide layer 160 is spaced apart from the color filter 121. That is, there is a gap between the insulating guide layer and the color filter 121. In this implementation manner, the reflectance of the screen can be effectively improved. This implementation manner is the optimal implementation manner.

In another technical solution of the present disclosure, FIG. 2 is a schematic sectional view provided according to a specific structure of an electrophoretic display module. As shown in FIG. 2, the electrophoretic display module specially includes second substrate 210 and the upper cover plate structure. The second substrate 210 is opposite to the first substrate 110. An electrophoretic display chamber is formed between the first substrate 110 and the second substrate 210. Pigment particles are filled in the electrophoretic display chamber. The pigment particles include white particles 310 and black particles 320. As shown in FIG. 2, dark particles are black particles, and light particles are white particles. It should be understood that the pigment particles-may further include two-color, three-color or multi-color pigment particles, which may be selected as required, and are not limited herein.

A surface of the second substrate 210 facing the first substrate 110 is provided with pixel electrode layer 220. Isolation structure 230 extending to the first substrate 110 is provided on the pixel electrode layer 220. A thin film transistor (TFT) glass substrate may be used as the second substrate.

Meanwhile, a surface of the pixel electrode layer 220 facing the first substrate 110 may further be provided with an isolation layer. The isolation layer is configured to isolate the pixel electrode layer from the electrophoretic display chamber, so as to prevent direct contact between pixel electrodes and electrophoretic medium. This can greatly prolong the refresh cycle. Meanwhile, with the isolation layer, the pixel electrode layer can be flatter, and the isolation structure can be provided better. The isolation layer may be made of polyimide (PI).

In an embodiment of the technical solution, an end of the isolation structure 230 away from the second substrate 210 abuts against the insulating guide layer 160. The isolation structure 230 is a trapezoidal structure extending from the pixel electrode layer 220 to the filter layer 120, has a trapezoidal cross section, and mainly functions to isolate the pigment particles. The isolation structure abuts against the insulating guide layer 160, such that both the upper substrate and the lower substrate are supported. This increases an overall structural strength of the electrophoretic display panel, reduces movement of electrophoretic medium, and reduces deformation of the upper cover plate and the lower cover plate caused by an external force, thereby improving overall pressure resistance.

In an embodiment of the technical solution, the pixel electrode layer includes a plurality of pixel electrodes 221 distributed in an array. A gap is formed between two adjacent pixel electrodes 221. The insulating guide layer 160 directly faces the gap. The isolation structure 230 covers the gap.

In an embodiment of the technical solution, a support structure is provided in the electrophoretic display chamber, which is not shown in the figure. Specifically, the support structure may be supporting microspheres. The support structure includes the supporting microspheres. The supporting microspheres are supported between the reflection structure 150 and the pixel electrode layer 220. The supporting microspheres mainly serve for supporting and fixing, and improve the pressure resistance of the screen. In display, pressing the screen does not make the image blurry and deformed, thereby improving the stability of the displayed image.

## Claims

1. An upper cover plate structure, comprising a first substrate (110), wherein a filter layer (120) is provided on a surface of the first substrate (110); the filter layer (120) comprises a plurality of spaced-apart color filters (121); a notch (130) is formed between adjacent color filters (121); a surface of the color filter (121) away from the first substrate (110) is provided with a reflection structure (150); wherein the reflection structure (150) comprises a plurality of micro-reflection units (151); the plurality of micro-reflection units (151) are uniformly arranged on the surface of each color filter (121); and a lower surface of the micro-reflection unit (151) is a cambered surface protruding away from the color filter (121); a surface of the reflection structure (150) away from the color filter (121) and a surface of the notch (130) are provided with a conductive layer (140); **characterized in that** an insulating guide layer (160) is filled in the notch (130); and the insulating guide layer (160) is located on a surface of the conductive layer (140) away from the first substrate (110).

2. The upper cover plate structure according to claim 1, wherein the insulating guide layer (160) is made of silicon nitride (SiNx).

3. The upper cover plate structure according to claim 1, wherein the insulating guide layer (160) is spaced apart from or comes in contact with the color filter (121).

4. An electrophoretic display module, comprising a second substrate (210) and the upper cover plate structure according to any one of claims 1 to 3, wherein the second substrate (210) is opposite to the first substrate (110); an electrophoretic display chamber is formed between the first substrate (110) and the second substrate (210); pigment particles are filled in the electrophoretic display chamber; a surface of the second substrate (210) facing the first substrate (110) is provided with a pixel electrode layer (220); and an isolation structure (230) extending to the first substrate (110) is provided on the pixel electrode layer (220).

5. The electrophoretic display module according to claim 4, wherein an end of the isolation structure (230) away from the second substrate (210) abuts against the insulating guide layer (160).

6. The electrophoretic display module according to claim 4, wherein the pixel electrode layer comprises a plurality of pixel electrodes (221) distributed in an array; a gap is formed between two adjacent pixel electrodes (221); the insulating guide layer (160) directly faces the gap; and the isolation structure (230) covers the gap.

7. The electrophoretic display module according to claim 4, wherein a support structure is provided in the electrophoretic display chamber.

8. The electrophoretic display module according to claim 7, wherein the support structure comprises supporting microspheres; and the supporting microspheres are supported between the reflection structure (150) and the pixel electrode layer (220).

9. The electrophoretic display module according to claim 4, wherein a cross-sectional shape of the isolation structure (230) comprises a trapezoid.

## Patentansprüche

1. Obere Deckplattenstruktur, umfassend ein erstes Substrat (110), wobei auf einer Oberfläche des ersten Substrats (110) eine Filterschicht (120) vorgesehen ist; die Filterschicht (120) mehrere beabstandete Farbfilter (121) umfasst; zwischen benachbarten Farbfiltern (121) eine Aussparung (130) ausgebildet ist; eine von dem ersten Substrat (110) abgewandte Oberfläche des Farbfilters (121) mit einer Reflexionsstruktur (150) versehen ist; wobei die Reflexionsstruktur (150) mehrere Mikroreflexionseinheiten (151) umfasst; die mehreren Mikroreflexionseinheiten (151) gleichmäßig auf der Oberfläche jedes Farbfilters (121) angeordnet sind; und eine Unterseite der Mikroreflexionseinheit (151) eine von dem Farbfilter (121) weg gewölbt vorspringende Oberfläche ist; eine von dem Farbfilter (121) abgewandte Oberfläche der Reflexionsstruktur (150) und eine Oberfläche der Aussparung (130) mit einer leitfähigen Schicht (140) versehen sind, **dadurch gekennzeichnet, dass** eine isolierende Führungsschicht (160) in die Aussparung (130) eingefüllt ist; und die isolierende Führungsschicht (160) auf einer von dem ersten Substrat (110) abgewandten Oberfläche der leitfähigen Schicht (140) angeordnet ist.

2. Obere Deckplattenstruktur nach Anspruch 1, wobei die isolierende Führungsschicht (160) aus Siliziumnitrid (SiNx) hergestellt ist.

3. Obere Deckplattenstruktur nach Anspruch 1, wobei die isolierende Führungsschicht (160) von dem Farbfilter (121) beabstandet ist oder mit dem Farbfilter (121) in Kontakt steht.

4. Elektrophoretisches Anzeigemodul, umfassend ein zweites Substrat (210) und die obere Deckplattenstruktur nach einem der Ansprüche 1 bis 3, wobei das zweite Substrat (210) dem ersten Substrat (110) gegenüberliegt; zwischen dem ersten Substrat (110) und dem zweiten Substrat (210) eine elektrophoretische Anzeigekammer ausgebildet ist; wobei Pigmentpartikel in die elektrophoretische Anzeigekammer eingefüllt sind; eine dem ersten Substrat (110) zugewandte Oberfläche des zweiten Substrats (210) mit einer Pixelelektrodenschicht (220) versehen ist; und eine sich bis zu dem ersten Substrat (110) erstreckende Isolationsstruktur (230) auf der Pixelelektrodenschicht (220) vorgesehen ist.

5. Elektrophoretisches Anzeigemodul nach Anspruch 4, wobei ein von dem zweiten Substrat (210) abgewandtes Ende der Isolationsstruktur (230) an der isolierenden Führungsschicht (160) anliegt.

6. Elektrophoretisches Anzeigemodul nach Anspruch 4, wobei die Pixelelektrodenschicht mehrere in einer Matrix angeordnete Pixelelektroden (221) umfasst; zwischen zwei benachbarten Pixelelektroden (221) ein Spalt ausgebildet ist; die isolierende Führungsschicht (160) dem Spalt direkt gegenüberliegt; und die Isolationsstruktur (230) den Spalt überdeckt.

7. Elektrophoretisches Anzeigemodul nach Anspruch 4, wobei in der elektrophoretischen Anzeigekammer eine Stützstruktur vorgesehen ist.

8. Elektrophoretisches Anzeigemodul nach Anspruch 7, wobei die Stützstruktur Stützmikrokugeln umfasst; und die Stützmikrokugeln zwischen der Reflexionsstruktur (150) und der Pixelelektrodenschicht (220) abgestützt sind.

9. Elektrophoretisches Anzeigemodul nach Anspruch 4, wobei die Querschnittsform der Isolationsstruktur (230) ein Trapez umfasst.

## Revendications

1. Structure de plaque de recouvrement supérieure, comprenant un premier substrat (110), dans laquelle une couche de filtre (120) est ménagée sur une surface du premier substrat (110) ; la couche de filtre (120) comprend une pluralité de filtres colorés (121) espacés ; une encoche (130) est formée entre des filtres colorés (121) adjacents ; une surface du filtre coloré (121) à l'écart du premier substrat (110) est pourvue d'une structure réfléchissante (150) ; dans laquelle la structure réfléchissante (150) comprend une pluralité de micro-unités réfléchissantes (151) ; la pluralité de micro-unités réfléchissantes (151) sont disposées de manière uniforme sur la surface de chaque filtre coloré (121) ; et une surface inférieure de la micro-unité réfléchissante (151) est une surface bombée faisant saillie à l'opposé du filtre coloré (121) ; une surface de la structure réfléchissante (150) à l'écart du filtre coloré (121) et une surface de l'encoche (130) sont pourvues d'une couche conductrice (140) ; **caractérisée en ce qu'**une couche de guidage isolante (160) est remplie dans l'encoche (130) ; et la couche de guidage isolante (160) est située sur une surface de la couche conductrice (140) à l'écart du premier substrat (110).

2. Structure de plaque de recouvrement supérieure selon la revendication 1, dans laquelle la couche de guidage isolante (160) est réalisée en nitrure de silicium (SiNx).

3. Structure de plaque de recouvrement supérieure selon la revendication 1, dans laquelle la couche de guidage isolante (160) est espacée ou vient en contact avec le filtre coloré (121).

4. Module d'affichage électrophorétique, comprenant un deuxième substrat (210) et la structure de plaque de recouvrement supérieure selon l'une quelconque des revendications 1 à 3, dans lequel le deuxième substrat (210) est opposé au premier substrat (110) ; une chambre d'affichage électrophorétique est formée entre le premier substrat (110) et le deuxième substrat (210) ; des particules de pigment sont remplies dans la chambre d'affichage électrophorétique ; une surface du deuxième substrat (210) faisant face au premier substrat (110) est pourvue d'une couche d'électrode de pixels (220) ; et une structure d'isolation (230) s'étendant jusqu'au premier substrat (110) est ménagée sur la couche d'électrode de pixels (220).

5. Module d'affichage électrophorétique selon la revendication 4, dans lequel une extrémité de la structure d'isolation (230) éloignée du deuxième substrat (210) vient en butée contre la couche de guidage isolante (160).

6. Module d'affichage électrophorétique selon la revendication 4, dans lequel la couche d'électrode de pixels comprend une pluralité d'électrodes de pixels (221) réparties selon un réseau ; un espace est formé entre deux électrodes de pixels adjacentes (221) ; la couche de guidage isolante (160) est directement en regard de l'espace ; et la structure d'isolation (230) recouvre l'espace.

7. Module d'affichage électrophorétique selon la revendication 4, dans lequel une structure de support est ménagée dans la chambre d'affichage électrophorétique.

8. Module d'affichage électrophorétique selon la revendication 7, dans lequel la structure de support comprend des microsphères de support ; et les microsphères de support sont soutenues entre la structure réfléchissante (150) et la couche d'électrode de pixels (220).

9. Module d'affichage électrophorétique selon la revendication 4, dans lequel une forme en coupe transversale de la structure d'isolation (230) comprend un trapèze.
